# EUROPEAN PATENT APPLICATION

(11) **EP 0 970 798 A1**
(43) Date of publication of application: **12.01.2000**
(21) Application number: 99105513.8
(22) Date of filing: 17.03.1999
(51) Int. Cl.: B29C 51/42

(54) **Process and plant for the selective zonal heating of a thermoformable material**

(30) Priority: 19.03.1998 IT VR980016
(71) Applicant: ISAP O.M.V. GROUP SPA, I-37025 Parona (IT)
(72) Inventor: Padovani, Pietro, 37126 Verona (IT)
(74) Representative: O'Byrne, Daniel Joseph

(57) **Abstract**

Process for the selective zonal heating of a thermoformable sheet material (3) or matrix, a process which provides for, in sequence, appropriately identifying at least one marked and/or decorated area having a well-defined perimeter (2) on said sheet material (3), advancing said sheet material (3) stepwise along a working track, heating the said sheet material along said working track only in relation to one side of one or a group of areas for thermoforming leaving the rest of the sheet material or matrix which is not heated relatively cold and therefore not subject to thermal deformation, and stepwise thermoforming along the said working track only in those areas so heated located in the said cold matrix.

## Description

This invention relates to a process and plant for selective zonal heating of a thermoformable plastics material. More particularly, this invention relates to a process and plant for producing lids which are centered within a respective printed or otherwise marked area in a thermoformable plastics sheet or plate material which is printed or otherwise marked in predetermined areas, by means of thermoforming within a close margin of tolerance.

In the packaging of industrial or food products in trays obtained by thermoforming from a suitable thermoplastics material it is desirable to provide the trays with lids which bear alphanumeric information and illustrations, e.g. reproduced by multicolour printing making use of suitable inks. Lids are normally colour printed using offset printing machines.

However, the printing of lids implies the performance of an additional operation which includes the need to provide dedicated machinery with respective automated systems to transfer the lids from the thermoforming press to the printing machine. This of course implies the availability of extensive space and frequent adjustment of the plant to changes in the format and configuration of different lids, and consequent adjustment dead times for onerous cleaning on each colour change and the need to have a buffer store for storage of the thermoformed lids while the printing machine is receiving maintenance (for a colour change or other purposes).

In addition to this a certain percentage of rejects is inevitably produced between one stage of processing or handling and another, and this constitutes a loss which has an appreciable effect on the final cost of the packed product.

The use of predecorated or preprinted sheet for thermoforming lids or other decorated objects would overcome all the abovementioned problems, with appreciable savings in the production of lids, provided that the printing and/or decoration remains centered on the thermoformed object or lid.

In order to attempt to reduce these disadvantages it has already been proposed that the sheet of thermoformable material from which the lids are made should be predecorated and/or preprinted in areas, possibly in several colours. Although this overcomes some disadvantages, the arrangement nevertheless creates others which are difficult to solve.

In fact, before being fed to the thermoforming press the predecorated and/or preprinted sheet or film must be heated to the thermoforming temperature. To this end the sheet is caused to pass through a heating furnace provided upstream from the thermoforming press, which is normally of the infrared radiation or contact heating type, usually a single heating plate arranged above or below the sheet and acts on the entire surface area of a moulding.

With these heating systems the thermal expansion to which the thermoformable material is necessarily subjected in the heating furnace results in the fact that the virtual centres of the printed and/or decorated areas are displaced with respect to each other, as a result of which the hot decorated and/or printed sheet is presented to the thermoforming press with its decorated areas displaced or offset in a wholly random and disordered way. The various attempts made to try to compensate mechanically for such thermal deformation, e.g. by acting on the devices transporting the sheet or on the distance between printing centres, have not achieved any appreciable result; in fact the compensations applied by modifications to the transport system merely heighten the thermal offsets.

In addition to this, with infrared radiation furnaces, those most widely used, the thermal deformation of the material to be thermoformed which is produced during heating is even more drastic, which results in lids being obtained with visibly displaced edges or misalignments, which are unacceptable, between decorated and/or printed areas and the areas which have been effectively involved in three dimensional thermoforming.

Moreover, the aesthetic appearance of a lid for packaging trays or other thermoformed objects constitutes the factor of maximum importance for satisfaction and acceptability on the part of the public purchasing the packaged product.

The main purpose of this invention is to provide a process and plant capable of brilliantly and simply and practically overcoming the problem described above.

According to a first aspect of this invention there is provided a process for selective zonal heating of a thermoformable sheet material or matrix, which process comprises, in sequence:
- bounding in a suitable way at least one area having a well-defined perimeter marked and/or decorated on the said sheet material,
- causing the said sheet material to advance stepwise along a working track,
- contact heating the said sheet material along said working track on only at least one side of one or a group of areas to be thermoformed, leaving the remainder of the sheet material or matrix which is not heated relatively cold and therefore not subject to thermal deformation, and
- stepwise thermoforming only the said so heated areas located in the said cold matrix along the said working track.

Advantageously, the said marked and/or decorated areas are uniformly spaced apart in columns and rows which are sequentially spaced in the said continuous sheet or plate material and are heated on at least one side.

The sheet material can be heated in several progressive stages from a stage of initial heating to a minimum predetermined temperature to a stage of final heating within the temperature range for thermoforming of the thermoformable material.

According to another aspect of the invention there is provided a plant for the thermoforming of at least one area having a predetermined perimeter in a thermoformable material, this plant comprising:
- feed means for the stepwise advance of a thermoformable sheet material on which at least one predetermined area has been decorated or otherwise marked where a pre-established portion of said sheet material is to be heated and thermoformed,
- selective heating means designed to effect contact heating at a suitable temperature of at least one side of said pre-established portion of the said thermoformable marked sheet material which is fed by the said feed means, and
- at least one thermoforming press located downstream of the said heating means arranged to sequentially thermoform the or each pre-established portion heated by the said heating means.

Advantageously, the said selective heating means are designed to heat at different temperature the two sides of the sheet or plate to be thermoformed so as to limit heating of the decorated or marked side when using colours sensitive to the thermoforming temperature.

Further features and advantages of this invention will be more apparent from the following detailed description of some currently preferred but not restrictive embodiments thereof illustrated with reference to the appended drawings, in which:
Figure 1 is a perspective diagrammatical view of a plant according to this invention,
Figure 2 shows a detail in Figure 1 in perspective view,
Figures 3 and 4 are each a perspective view of a length of sheet marked with round and rectangular areas respectively and equipped with spaced reference marks in accordance with this invention,
Figure 5 shows a diagrammatical perspective view of a contact heating head for a marked area on a thermoformable sheet on a magnified scale,
Figure 6 shows a cross-sectional view along a vertical plane in a contact heating head for a sheet of thermoformable materials with areas marked as in Figure 3,
Figure 7 shows a detail of a heating plate of the head in Figures 5 and 6;
Figure 8 shows a perspective view of a length of sheet marked with annular areas and equipped with spaced reference marks in accordance with this invention,
Figure 9 is a cross-sectional view along a vertical plane in a contact heating head for a sheet of thermoformable material with areas marked as in Figure 8,
Figure 10 illustrates a detail of a heating plate in the head in Figure 9,
Figures 11 and 12 are each a perspective view slightly from above of a lid obtained from a sheet as in Figure 3 and Figure 4, respectively,
Figure 13 shows a detail in cross-section of the lid edge in Figures 11 and 12, and
Figure 14 is a view similar to that in Figure 1, but including a sequence of progressive heating stations.

Identical or similar parts or components have been identified using the same reference numbers in the appended drawings.

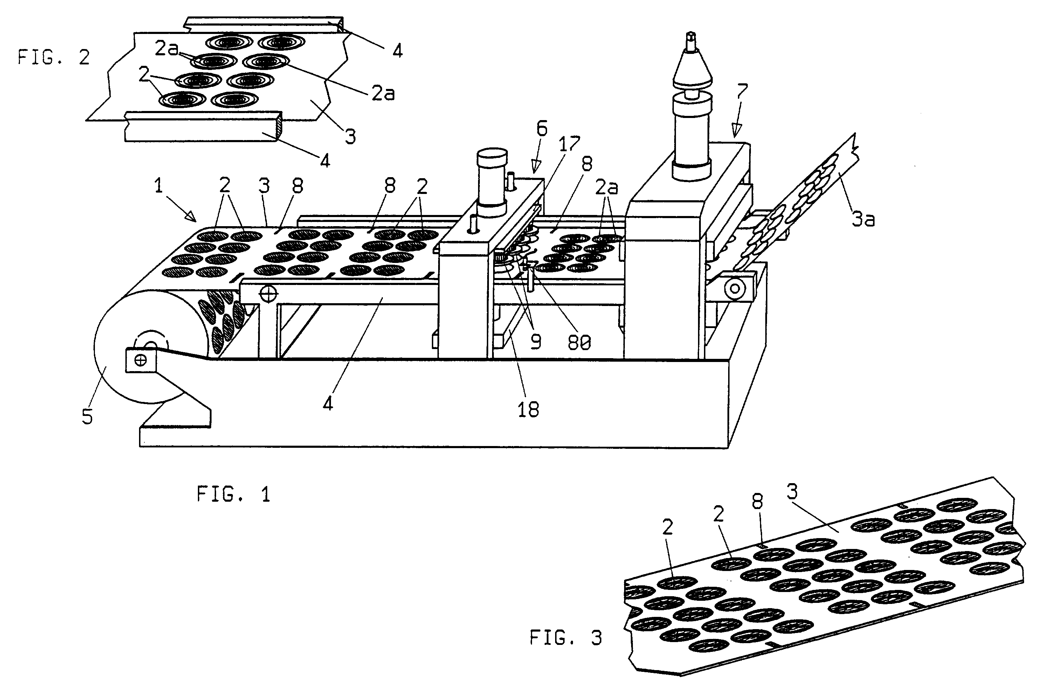

First of all with reference to Figures 1 and 2, it will be noted that a plant, generically indicated by 1, for the thermoforming of at least one area having a predetermined perimeter 2 in an uninterrupted sheet of thermoformable material 3 substantially comprises a chain conveyor 4 designed to advance sheet 3 fed from a coil 5, a heating unit or station 6 in contact with a certain number of areas 2 and a thermoforming press 7 located downstream of the heating station.

Chain conveyor 4 may be of any suitable type, e.g. of a type which is well-known in the art, and which is designed to advance, in a stepwise manner, sheet 3 of thermoformable material on which a plurality of areas 2 to be heated and thermoformed, spaced in accordance with one or more predetermined spacings, have been printed or decorated or otherwise marked. Sheet 3 has reference marks 8, for example in the form of lateral notches or bars, for optical reading or of another suitable reading type which have a predetermined spacing.

Heating unit or station 6 comprises a number of heating heads 9, e.g. eight heating heads located in two parallel rows of four heads each uniformly spaced apart.

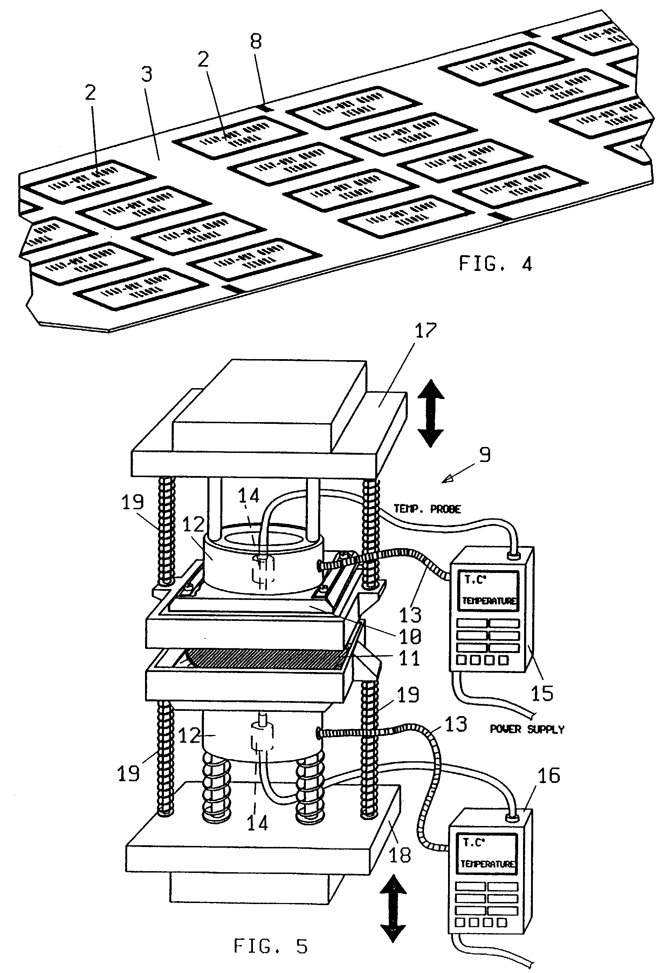

As will be better seen from Figures 5 to 7, each heating head 9 has one pair of opposing plates 10 and 11, at least one of which is heated and movably mounted with respect to the other. Two heating plates and each format of a heating plate heated by at least one electrical resistance 12 fed by a lead 13 are illustrated. Of course, other suitable heating systems for the plates 10 and 11, e.g. by means of a hot fluid, can be provided. The temperature of each plate is detected by a sensor 14 connected to a respective programmable electronic control unit 15 and 16. Each plate 10, 11 is supported by a respective support 17 and 18, which it can approach acting against return elastic means e.g. comprising helical springs 19. In turn, supports 17 and 18 are program controlled to cause the plates to move forwards and backwards in accordance with the plant's cycle or working sequence.

Each selective heating head 9 is designed to heat a corresponding printed or otherwise marked area 2 by contact at a suitable temperature in each pitch length between a reference 8 and the next, e.g. detected or read by a suitable reader 80 arranged along the path of the references 8 of the sheet of thermoformable material 3 fed stepwise by conveyor 4. Marked areas 2 may be heated on both sides of sheet 3 or on one side only or on a portion of side or marked area 2.

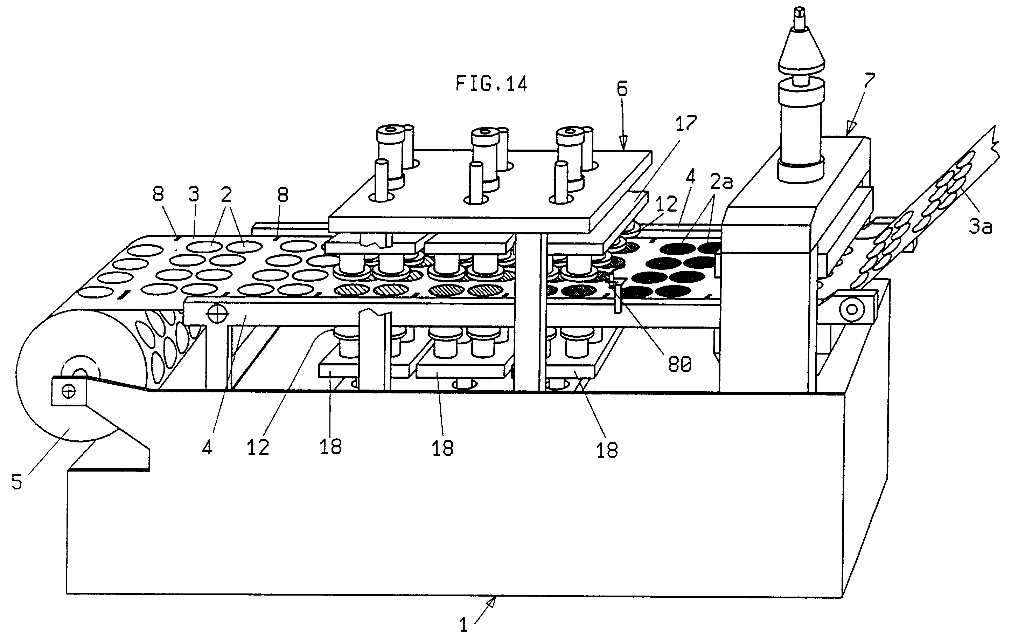

If desired, several heating units or stations 6 placed in sequence one after the other, e.g. as illustrated in Figure 14 can be provided, in order to obtain differentiated heating in subsequent stages and at progressive temperature levels. As the heating time for sheet 3 also depends on its thickness, this arrangement is particularly advantageous because it permits the thickness of sheet 3 to be varied without increasing the time between one thermoforming operation and the next, and therefore does not reduce working cycles per unit time when it is necessary to use a sheet of greater thickness.

Press 7 may be of any suitable type, with cutting out of the thermoformed lids or objects within or outside the press moulding. In the case of a press with cutting out outside the press moulding, the thermoformed lids will be removed from the thermoforming mould by the waste 3a. When using, instead, a press with cutting out within the press moulding, the thermoformed lids can be removed and picked up to be taken away from the thermoforming mould by means of a suitable pick-up means, as is well known in the art of thermoforming.

As shown in Figures 1 and 2, at the exit from heating unit 6 marked and heated areas 2 have undergone thermal deformation as indicated by concentric lines 2a, while the remainder of the sheet or matrix in which areas 2 are located remains cold and therefore does not undergo thermal deformation, as a result of which the distances between reference marks or notches 6 is maintained perfectly, a determining factor for the subsequent operation of accurate thermoforming with the desired tolerances in area 2.

As shown by Figures 3 and 4, areas 2 may have various perimeter configurations.

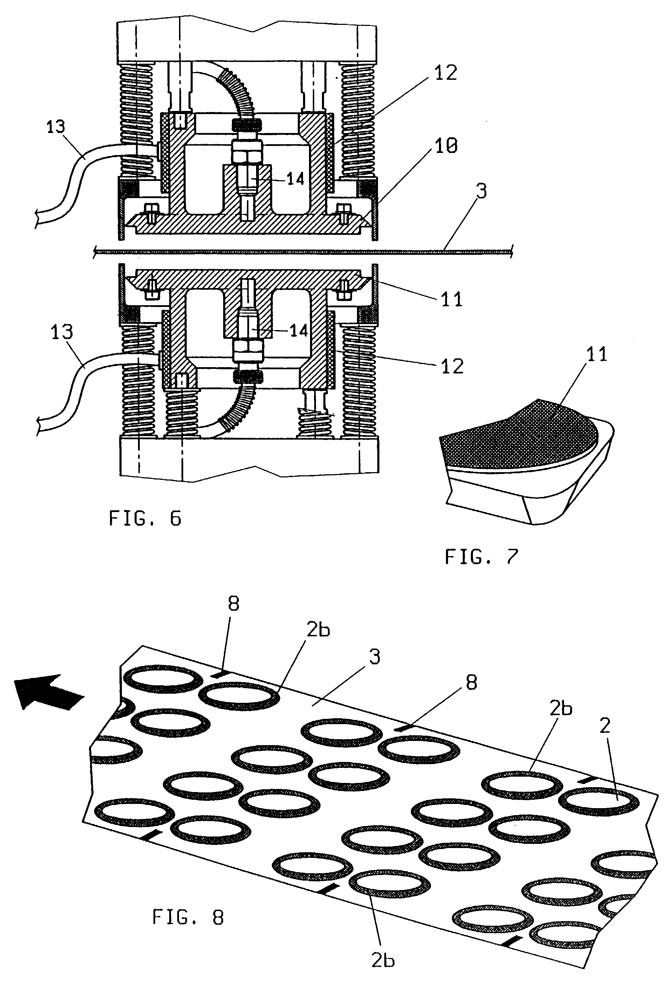

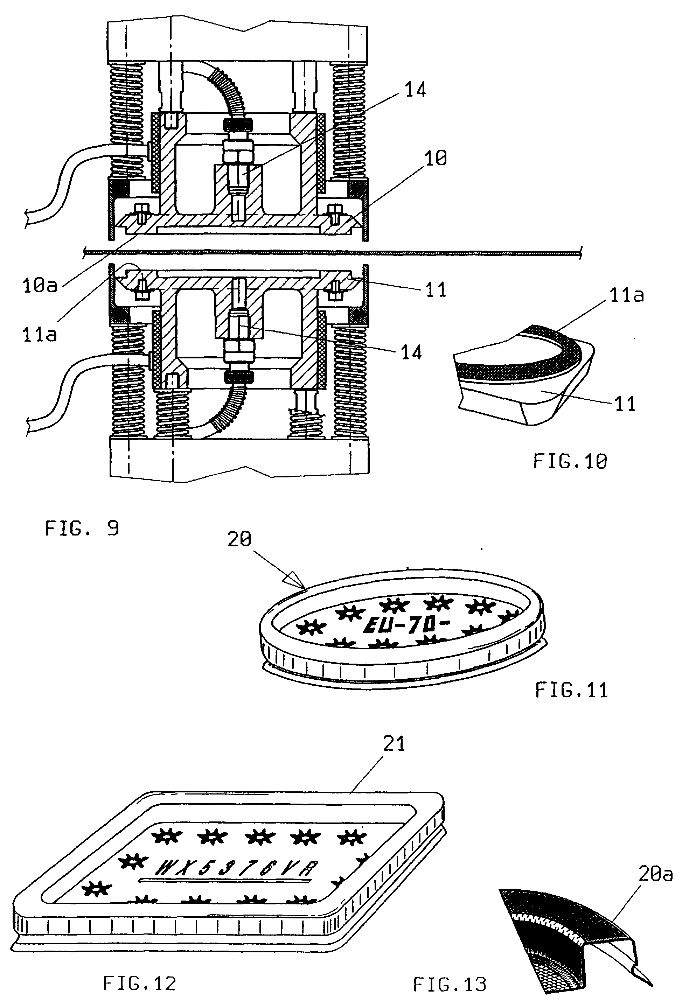

The embodiment illustrated in Figures 8 to 10 relates to areas 2 which must be heated only in respect of a peripheral annular area 2b, for which heating plates 10 and 11 are shaped so that they have an annular contact area 10a and 11a corresponding for example to produce a lid 20, such as that illustrated in Figures 11, or a lid 21 such as illustrated in Figure 12, that is thermoformed only in their peripheral annual area 20a (Figure 13).

The invention as described above can be subjected to numerous modifications and variants within the scope of the protection defined by the claims.

The contents of the Italian Patent Application No. VR98A000016, for which priority is claimed, are incorporated herein by reference.

Where technical feature mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A process for the selective zonal heating of a thermoformable sheet material or matrix, characterised in that it comprises, in sequence:
- bounding in a suitable way at least one area (2) having a well-defined perimeter marked and or decorated on the said sheet material (3),
- causing the said sheet material (3) to advance stepwise along a working track (4),
- contact heating the said sheet material (3) along said working track (4) on only at least one side of one or a group of areas (2) to be thermoformed, leaving the remainder of the sheet material or matrix (3) which is not heated relatively cold and therefore not subject to thermal deformation, and
- stepwise thermoforming only the said so heated areas (2) located in the said cold matrix (3) along the said working track (4).

2. A process according to claim 1, characterised in that the said sheet material (3) is provided with reference marks (8) spaced a specific distance apart.

3. A process according to claim 1 or 2, characterised in that the said marked and or decorated areas (2) are spaced apart by a uniform pitch in columns and rows which are sequentially spaced in the said continuous sheet or plate material (3).

4. A process according to claim 1, characterised in that the areas to be thermoformed are heated on one side to a temperature which is different from that on the other side.

5. A process according to any preceding claim, characterised in that heating of the sheet or plate material (3) occurs in several progressive stages from a stage of initial heating to a minimum predetermined temperature to a stage of final heating within the temperature range for thermoforming of the thermoformable material.

6. A plant for the thermoforming of at least one area (2) having a predetermined perimeter in a thermoformable material, characterised in that it comprises:
- feed means (4) for the stepwise advance of a thermoformable sheet material (3) on which at least one predetermined area (2) has been decorated or otherwise marked where a pre-established portion of said sheet material (3) is to be heated and thermoformed,
- selective heating means (6) designed to effect contact heating at a suitable temperature of at least one side of said pre-established portion of the said thermoformable marked sheet material (3) which is fed by the said feed means (4), and
- at least one thermoforming press (7) located downstream of the said heating means (6) arranged to sequentially thermoform the or each pre-established portion heated by the said heating means (6).

7. A plant according to claim 6, characterised in that the said feed means (4) comprises a chain conveyor designed to advance the sheet (3) fed from a coil (5).

8. A plant according to claim 6 or 7, characterised in that the said heating means (6) comprises a unit for the contact heating of a number of areas (2) which includes at least one heating head (9), comprising a pair of opposing plates (10, 11) at least one of which provides heating and is movably mounted with respect to the other on opposite side with respect to the said sheet material (3).

9. A plant according to claim 6 or 8, characterised in that the said selective heating means (6) are arranged to heat at different temperatures the two sides of the sheet or plate material (3) to be thermoformed, thereby limiting heating of the decorated or marked side thereof.

10. A plant according to claim 8 or 9, characterised in that each heating plate (10, 11) comprises at least one electrical resistance (12) and control means (15, 16) for programming the heating temperature.

11. A plant according to claim 10, characterised in that each heating plate (10, 11) is supported by a support (17, 18), towards which it can advance upon control against resilient return means (19).

12. A plant according to any claim 6 to 11, characterised in that the said thermoformable sheet material (3) is provided with reference marks (8) spaced by a pre-determined pitch from one another.

13. A plant according to any preceding claim 11 or 12, characterised in that it comprises means for detecting the said reference marks (8) on the said thermoformable sheet material (3).

14. A plant according to any claim 6 to 13, characterised in that it comprises a plurality of heating units or stations (6) placed in sequence one after the other to effect differential heating of the said thermoformable sheet material (3) in successive stages at different temperature levels.
